# EUROPÄISCHE PATENTSCHRIFT

(11) **EP 1 334 396 B1**
(45) Veröffentlichungstag und Bekanntmachung des Hinweises auf die Patenterteilung: **22.03.2006**
(21) Anmeldenummer: 01986354.7
(22) Anmeldetag: 02.10.2001
(51) Int. Cl.: G02B 21/00

(54) **REFLEKTORREVOLVER FÜR EIN INVERSES MIKROSKOP**
REFLECTOR TURRET FOR AN INVERTED MICROSCOPE
TOURELLE PORTE-REFLECTEURS POUR MICROSCOPE INVERSE

(30) Priorität: 06.10.2000 DE 10050677
(43) Veröffentlichungstag der Anmeldung: 13.08.2003
(73) Patentinhaber: CARL ZEISS JENA GmbH, 07745 JENA (DE)
(72) Erfinder: DIETZSCH, Leander, 07743 Jena (DE); GONSCHOR, Matthias, 37130 Gleichen (DE); ASCHENBACH, Ralph, 37073 Göttingen (DE)
(86) Internationale Anmeldenummer: PCT/EP2001/011368
(87) Internationale Veröffentlichungsnummer: WO 2002/029468

(56) Entgegenhaltungen:
- US-A- 4 770 520
- US-A- 5 138 486
- US-A- 5 896 224
- US-A- 6 101 029

## Beschreibung

Die Erfindung betrifft einen Fluoreszenzrevolver für inverse Mikroskope, der Fluoreszenzwürfel enthält.
Diese können wahlweise in Wirkstellung gebracht werden, um unterschiedliche fluoreszenzmikroskopische Untersuchungen durchführen zu können.

Diese Fluoreszenzwürfel bestehen in bekannter Weise aus Erregerfilter in Richtung der Lichtquelle , dichriotischem Teilerspiegel und Sperrfilter in Richtung der Beobachtung. Derartige Revolver sind beispielsweise aus DE 2316386 bekannt.

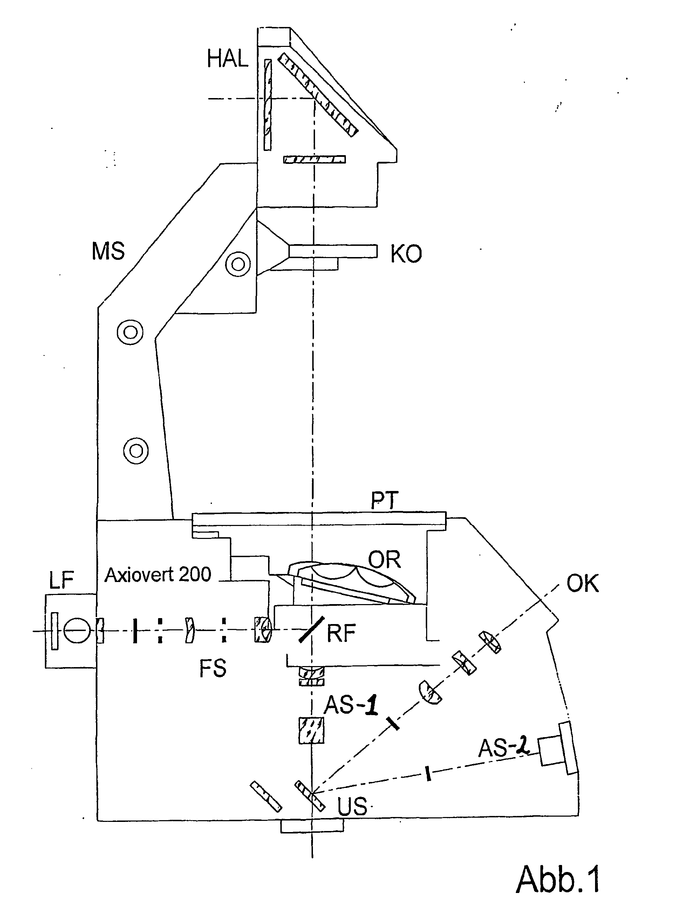

In der Abbildung 1 ist schematisch der Strahlengang eines inversen Mikroskopes dargestellt.
Eine Halogenlampe HAL am Mikroskopstativ MS beleuchtet über einen Kondensor KO ein auf dem Probentisch PT befindliches Objekt.
Unterhalb des Probentisches befindet sich ein Objektivrevolver OR , hier ohne die einzusetzenden Objektive dargestellt, sowie ein Reflektor RF , der Teil eines nicht dargestellten Reflektorrevolvers ist , zur einschaltbaren Einspiegelung eines Fluoreszenzanregungsstrahlengangs FS einer Lichtquelle LF.
Der Abbildungsstrahlengang (AS-1) wird über einen Umlenkspiegel US in Richtung des Okulares OK( nicht dargestellt) des Betrachters umgelenkt.
Weiterhin ist ein Aufzeichnungsstrahiengang (AS-2) für fotografische Aufnahmen vorgesehen.

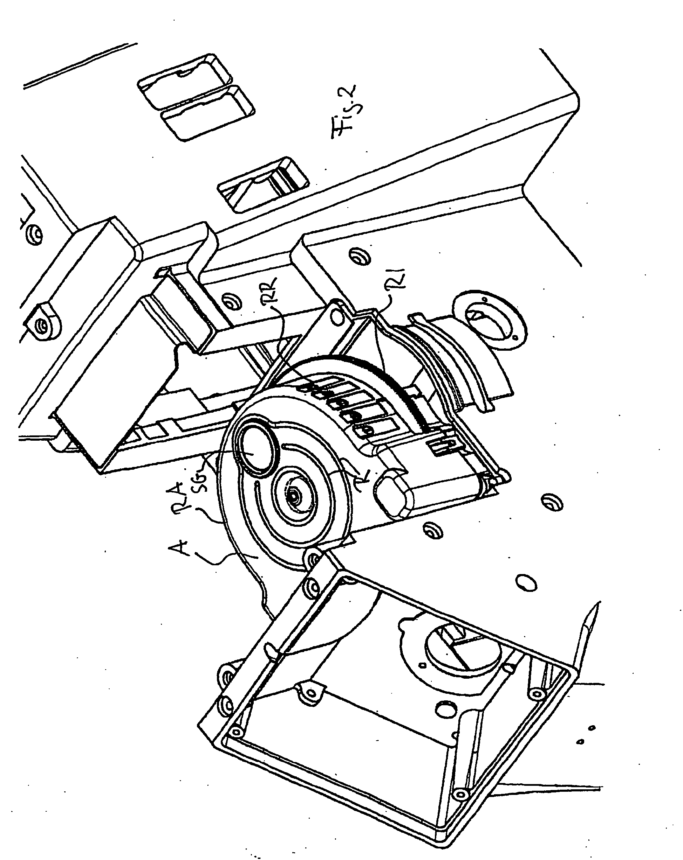

Fig.2 Unterhalb des hier nicht dargestellten Objektivrevolvers OR befindet sich der Reflektorrevolver RR, der einen Rändelring RI zum manuellen Wechsel der Reflektorposition aufweist, der bei motorisierter Ausführung als Zahnkranz zum Antrieb über eine nicht dargestellten Motor/ Getriebekombination dient. Der Reflektorrevolver weist eine Abdeckung A, vorzugsweise in Form einer Haube mit wannenartiger Oberfläche auf, in die Rillen R zur Aufnahme von Flüssigkeit eingelassen sind, die hierdurch das Abfließen der Flüssigkeit verhinden sowie einen erhabenen Rand RA , der den Ablauf von Flüssigkeit in die unteren Mikroskopteile unterbindet.

In der Abdeckung A ist ein Schutzglas SG vorgesehen, das den optischen Strahlenweg nach unten freigibt und gleichzeitig einen Flüssigkeitsschutz darstellt. Das Schutzglas ist zur Reinigung, zum Wechseln oder falls seine Reflexe störend sein sollten, abnehmbar ausgebildet und befindet sich zu diesem Zweck in einer Fassung F, die in die Haube einrastet.
An sich ist die Glasplatte des Schutzglases SG jedoch zur Reflexvermeidung bereits vorteilhaft in einem Winkel ungleich 90 Grad zur optischen Achse , vorzugsweise mit einer Abweichung von 3-5 Grad von der Senkrechten , in die Abdeckung A eingelassen.

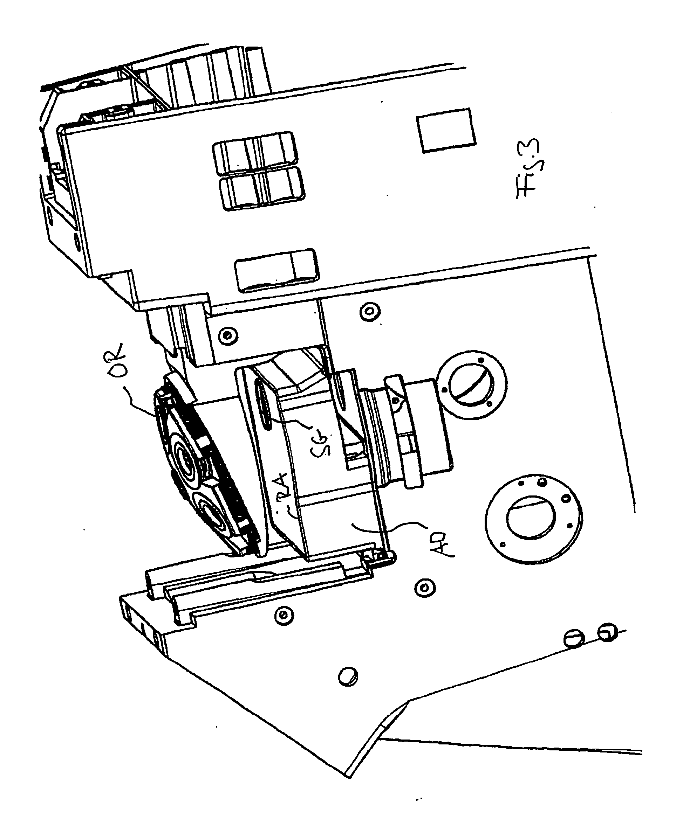

Fig.3 Falls der Reflektorrevolver nicht vorgesehen ist, tritt an seine Stelle eine analog geformte leere licht- und flüssigkeitsdichte Abdeckung AD , ebenfalls einem Rand RA in leichter Wannenform sowie wechselbarem Schutzglas SG, um den Bereich unterhalb des Objektivrevolvers vor Störlicht und Flüssigkeit zu schützen.

## Patentansprüche

1. Reflektorrevolver für ein inverses Mikroskop, der eine zumindest nach oben wasser- und außerhalb des Mikroskopstrahlenganges im wesentlichen lichtdichte Abdeckung (A) aufweist.

2. Reflektorrevolver nach Anspruch 1, wobei im Oberteil der Abdeckung (A) im Lichtweg ein Schutzglas (SG) flüssigkeitsdicht eingelassen ist.

3. Reflektorrevolver nach Anspruch 1 oder 2, wobei das Schutzglas (SG) abnehmbar und/oder auswechselbar ausgebildet ist.

4. Reflektorrevolver nach einem der vorangehenden Ansprüche , wobei das Schutzglas (SG) in einem von der Senkrechten abweichenden Winkel zur optischen Achse des Lichtweges angeordnet ist.

5. Reflektorrevolver nach einem der vorangehenden Ansprüche, wobei die Abdeckung (A) zur Ableitung von Flüssigkeit Rillen (R) und / oder einen ansteigenden Abdeckung (A) zur Ableitung von Flüssigkeit Rillen (R) und / oder einen ansteigenden Rand (RA) aufweist.

6. Inverses Mikroskop mit einem Reflektorrevolver (RR) nach einem der Ansprüche 1 bis 5.

## Claims

1. Reflector turret for an inverse microscope, comprising a cap (A) which is sealed with respect to water at least from the top and is substantially sealed with respect to light outside the microscope beam path.

2. Reflector turret as claimed in Claim 1, wherein protective glass (SG) is inserted in the upper part of the cap (A) in the light path in a sealed manner with respect to liquid.

3. Reflector turret as claimed in Claim 1 or 2, wherein the protective glass (SG) is formed so as to be detachable and/or replaceable.

4. Reflector turret as claimed in any one of the preceding Claims, wherein the protective glass (SG) is disposed at a non-perpendicular angle with respect to the optical axis of the light path.

5. Reflector turret as claimed in any one of the preceding Claims, wherein the cap (A) comprises grooves (R) and/or an inclined edge (RA) so as to channel away liquid.

6. Inverse microscope comprising a reflector turret (RR) as claimed in any one of Claims 1 to 5.

## Revendications

1. Revolver de réflecteur pour un microscope inverse qui comporte un recouvrement (A) étanche à l'eau au moins vers le haut, et essentiellement à la lumière en dehors du trajet des rayons du microscope.

2. Revolver de réflecteur selon la revendication 1, dans lequel un verre de protection (SG) est encastré de façon étanche aux liquides dans la partie supérieure du recouvrement (A), dans le trajet de la lumière.

3. Revolver de réflecteur selon la revendication 1 ou 2, dans lequel le verre de protection (SG) est configuré de sorte à être amovible et/ou interchangeable.

4. Revolver de réflecteur selon l'une des revendications précédentes, dans lequel le verre de protection (SG) est disposé par rapport à l'axe optique du trajet de la lumière en un angle s'écartant de la perpendicularité.

5. Revolver de réflecteur selon l'une des revendications précédentes, dans lequel le recouvrement (A) comporte des rigoles (R) pour l'évacuation du liquide et/ou un bord surélevé (RA).

6. Microscope inverse avec un revolver de réflecteur (RR) selon l'une des revendications 1 à 5.
